# EUROPÄISCHE PATENTANMELDUNG

(11) **EP 4 224 397 A1**
(43) Veröffentlichungstag der Anmeldung: **09.08.2023**
(21) Anmeldenummer: 22155004.9
(22) Anmeldetag: 03.02.2022
(51) Int. Cl.: G06Q 30/02, G06Q 30/06

(54) **VERFAHREN ZUR UNTERSTÜTZUNG EINES OFFLINE-EINKAUFS EINER PERSON IN ODER BEI EINEM STATIONÄREN VERKAUFSPUNKT, ORTUNGSSYSTEM, TELEKOMMUNIKATIONSENDGERÄT ZUR VERWENDUNG MIT EINEM ORTUNGSSYSTEM, COMPUTERPROGRAMM UND COMPUTERLESBARES MEDIUM**

(71) Anmelder: Deutsche Telekom AG, 53113 Bonn (DE)
(72) Erfinder: MINOW, Jascha, 64625 Bensheim (DE); EL-MALLOUKI, Said, 56329 St. Goar (DE); JAHN, Carl, 65191 Wiesbaden (DE)
(74) Vertreter: Schwöbel, Thilo K.

(57) **Zusammenfassung**

Es wird ein Verfahren zur Unterstützung eines Offline-Einkaufs einer Person in oder bei einem stationären Verkaufspunkt, wobei die Person ein Telekommunikationsendgerät mit sich führt, wobei das Telekommunikationsendgerät mittels eines Ortungssystems in den Räumlichkeiten des Verkaufspunkts ortbar ist, wobei der Person
-- Kaufhistoriedaten und/oder Wunschlistendaten von einem oder mehreren Online-Einkäufen oder Online-Händlern und
-- Körpergrößedaten
zugeordnet und für die Verwendung in dem Verkaufspunkt freigegeben sind,
wobei das Verfahren die folgenden Schritte umfasst,

-- in einem ersten Schritt wird das Telekommunikationsendgerät beim Betreten oder in der Umgebung des stationären Verkaufspunkts erkannt und es stehen die Kaufhistoriedaten und/oder die Wunschlistendaten zur Verfügung,
-- in einem dem ersten Schritt nachfolgenden zweiten Schritt, wird detektiert, wo sich die Person innerhalb des stationären Verkaufspunkts aufhält und/oder welche Waren sie aus einer Auslage des Verkaufspunkts herausnimmt und/oder welche Waren für sie herausgenommen werden und/oder in der Nähe welcher Waren die Person verweilt,
-- in einem dem zweiten Schritt nachfolgenden dritten Schritt wird eine individuelle Empfehlungsinformation auf einer der Person zumindest temporär zugeordneten Anzeigeeinrichtung angezeigt.

## Beschreibung

### Stand der Technik

Die Erfindung betrifft ein Verfahren zur Unterstützung eines Offline-Einkaufs einer Person in oder bei einem stationären Verkaufspunkt, wobei die Person ein Telekommunikationsendgerät mit sich führt, wobei das Telekommunikationsendgerät mittels eines Ortungssystems in den Räumlichkeiten des Verkaufspunkts ortbar ist.

Die Erfindung betrifft des Weiteren ein Ortungssystem zur Unterstützung eines Offline-Einkaufs einer Person in oder bei einem stationären Verkaufspunkt, wobei die Person ein Telekommunikationsendgerät mit sich führt, wobei das Telekommunikationsendgerät mittels des Ortungssystems in den Räumlichkeiten des Verkaufspunkts ortbar ist.

Die Erfindung betrifft ferner ein Telekommunikationsendgerät zur Verwendung mit einem erfindungsgemäßen Ortungssystem.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Bei vorbekannten Verfahren zur Durchführung eines Offline-Einkaufs einer Person in oder bei einem stationären Verkaufspunkt (etwa im stationären Einzelhandel) ist es in der Regel nicht möglich, dass in automatisierter Form an eine Person Empfehlungen bzw. Beratung auf der Basis von Vorlieben dieser Person gegeben werden bzw. wird. Zudem ist beim Offline Einkauf auch kein Zugriff durch ein System des stationären Verkaufspunkts auf etwaige Wunschlisten oder sonstige Einkaufslisten einer Person möglich, welche den stationären Verkaufspunkt, etwa einen Laden, betritt. Für solche Personen bzw. Kunden ist dies ein Nachteil, denn der Einkauf vor Ort (d.h. in oder bei einem stationären Verkaufspunkt) gestaltet sich damit langwieriger und aufwändiger als der Einkauf in einem Online Shop; zudem kann das Durchsuchen eines Katalogs in oder bei einem stationären Verkaufspunkt nicht so komfortabel und effizient abgebildet werden, wie in einem Online Shop; es ist etwa ein Regal mit einer Selektion von Jacken nicht so einfach zu durchstöbern, wie ein digitaler Katalog auf einer Website; auch kann die Darstellung von Produkten in einem Online Shop (bzw. Webshop) mehr Informationen liefern sowie die Produkte besser präsentieren.

### Offenbarung der Erfindung

Der Erfindung liegt die Aufgabe zugrunde, ein Verfahren zur Unterstützung eines Offline-Einkaufs einer Person in oder bei einem stationären Verkaufspunkt bereitzustellen, wobei die Person ein Telekommunikationsendgerät mit sich führt, wobei das Telekommunikationsendgerät mittels eines Ortungssystems in den Räumlichkeiten des Verkaufspunkts ortbar ist, wobei es das Verfahren in vergleichsweise einfacher und effizienter Weise ermöglicht, den Offline-Einkauf der Person effizienter zu gestalten.

Die Aufgabe wird erfindungsgemäß gelöst durch ein Verfahren zur Unterstützung eines Offline-Einkaufs einer Person in oder bei einem stationären Verkaufspunkt, wobei die Person ein Telekommunikationsendgerät mit sich führt, wobei das Telekommunikationsendgerät mittels eines Ortungssystems in den Räumlichkeiten des Verkaufspunkts ortbar ist, wobei der Person
-- Kaufhistoriedaten und/oder Wunschlistendaten von einem oder mehreren Online-Einkäufen oder Online-Händlern und
-- Körpergrößedaten
   zugeordnet und für die Verwendung in dem Verkaufspunkt freigegeben sind,
   wobei das Verfahren die folgenden Schritte umfasst,
-- in einem ersten Schritt wird das Telekommunikationsendgerät beim Betreten oder in der Umgebung des stationären Verkaufspunkts erkannt und es stehen die Kaufhistoriedaten und/oder die Wunschlistendaten zur Verfügung,
-- in einem dem ersten Schritt nachfolgenden zweiten Schritt, wird detektiert, wo sich die Person innerhalb des stationären Verkaufspunkts aufhält und/oder welche Waren sie aus einer Auslage des Verkaufspunkts herausnimmt und/oder welche Waren für sie herausgenommen werden und/oder in der Nähe welcher Waren die Person verweilt,
-- in einem dem zweiten Schritt nachfolgenden dritten Schritt wird eine individuelle Empfehlungsinformation auf einer der Person zumindest temporär zugeordneten Anzeigeeinrichtung angezeigt.

Es ist dadurch gemäß der vorliegenden Erfindung in vorteilhafter Weise möglich, dass in vergleichsweise einfacher Art und Weise der Offline-Einkauf einer Person in oder bei einem stationären Verkaufspunkt einfacher, schneller und effizienter zu gestalten, da insbesondere Kaufhistoriedaten und/oder Wunschlistendaten, etwa die Profile (bzw. Profilinformationen) und/oder Produktinteressen der einkaufenden Person berücksichtigt werden können und insbesondere diese Person mehr oder weniger passende Empfehlungen bekommen können. Generell ist bekannt, dass je besser verwendete Kaufhistoriedaten und/oder Wunschlistendaten- insbesondere bei einem genutzten Shop bzw. Verkaufspunkt - sind, desto mehr Empfehlungen sind verfügbar (bzw. desto größer ist der Anteil derjenigen Empfehlungen), welche von der betreffenden Person als mit hoher Wahrscheinlichkeit passend bewertet werden und umso einfacher wird einer solchen Person auch das Stöbern in einem Katalog oder in Katalogen gemacht.

Erfindungsgemäß ist es somit insbesondere vorteilhaft möglich, dass das Einkaufserlebnis eines Offline-Einkaufs einer Person in oder bei einem stationären Verkaufspunkt verbessert werden kann und hierdurch auch eine Absatzoptimierung und Absatzsteuerung im Bereich des stationären Einzelhandel ermöglicht wird.

Das erfindungsgemäße Verfahren bezieht sich auf die Unterstützung eines Offline-Einkaufs einer Person in oder bei einem stationären Verkaufspunkt. Der besondere Vorteil des erfindungsgemäßen Verfahrens erschließt sich dadurch, dass der Person Kaufhistoriedaten und/oder Wunschlistendaten von einem, jedoch insbesondere von mehreren, Online-Einkäufen oder Online-Händlern sowie darüber hinaus Körpergrößedaten zum einen (insbesondere aufgrund von früheren Einkäufen und/oder aufgrund von früheren Dateneingaben oder Messungen, etwa zur Messung oder Erhebung von Körpergrößedaten wie der Länge und/oder der Höhe und/oder des Umfangs der Person insgesamt und/oder von Körperteilen der Person) zugeordnet sind und zum anderen für die Verwendung in dem betrachteten Verkaufspunkt (oder aber in allen stationären Verkaufspunkten), d.h. durch ein System des Verkaufspunkts bzw. durch ein mit dem Verkaufspunkt verbundenen System, freigegeben sind, wobei erfindungsgemäß die Zuordnung der personenindividuellen Daten zu einer konkreten sich aktuell (d.h. zu einem betrachteten bzw. vorgegebenen Zeitpunkt) in oder bei dem stationären Verkaufspunkt befindenden Person in einer möglichst automatischen bzw. automatisierten und möglichst einfachen und für die betreffende Person unkomplizierten Art und Weise erfolgt. Hierzu ist es erfindungsgemäß vorgesehen, dass die betreffende bzw. betrachtete Person ein Telekommunikationsendgerät mit sich führt, welches mittels eines Ortungssystems in den Räumlichkeiten des Verkaufspunkts (mittels eines in oder im Bereich des stationären Verkaufspunkts aktiven Ortungssystems) ortbar ist, d.h. welches mit dem im Bereich des stationären Verkaufspunkts aktiven Ortungssystems derart (insbesondere unter Nutzung von Funksignalen und/oder von optischen Signalen und/oder von Infrarotsignalen und/oder von Ultraschall) zu interagieren in der Lage ist, dass aufgrund dieser Interaktion die Position bzw. Lage bzw. der Ort des Telekommunikationsendgeräts hinreichend genau durch das Ortungssystem bestimmbar ist. Bei dem Telekommunikationsendgerät handelt es sich insbesondere um ein (durch die Person mitgebrachtes) Telekommunikationsendgerät der betrachteten bzw. betreffenden Person selbst bzw. ihr zugeordnet, etwa ein (persönliches bzw. zur persönlichen Benutzung durch die Person vorgesehenes) Mobiltelefon, insbesondere als Smartphone bzw. als intelligentes Mobiltelefon oder als mit Mobilfunkkommunikationsfunktonalität ausgestattetes tragbares Gerät (im Sinn eines Wearables), beispielsweise eine Uhr, Sportuhr oder intelligente Uhr (smart watch). Alternativ (oder zusätzlich) zu einem solchen durch die Person zum Ort des stationären Verkaufspunkts mitgebrachten Telekommunikationsendgeräts ist es gemäß der vorliegenden Erfindung auch vorgesehen, dass es sich bei dem Telekommunikationsendgerät um ein im oder beim stationären Verkaufspunkt vorrätiges (d.h. vorgehaltenes) und erst beim Betreten oder in der Umgebung des stationären Verkaufspunkts der Person zugeordnetes (durch das in oder im Bereich des stationären Verkaufspunkts aktiven Ortungssystems ortbaren) Telekommunikationsendgerät ist. Erfindungsgemäß weist das Verfahren die folgenden Schritte auf:
-- in einem ersten Schritt wird das Telekommunikationsendgerät beim Betreten oder in der Umgebung des stationären Verkaufspunkts erkannt und es stehen die Kaufhistoriedaten und/oder die Wunschlistendaten der betrachteten Person, d.h. einer Kundin oder eines Kunden, zur Verfügung,
-- in einem dem ersten Schritt nachfolgenden zweiten Schritt, wird detektiert (insbesondere mehr oder weniger kontinuierlich bzw. in vergleichsweise kurzen zeitlichen Abständen bzw. mit einer durchschnittlichen Wiederholrate von mehr als 0,5 pro Sekunde (d.h. mindestens einmal alle 2 Sekunden), bevorzugt mit einer durchschnittlichen Wiederholrate von mehr als 1 pro Sekunde (d.h. mindestens einmal in jeder Sekunde)), wo sich die Person (bzw. das Telekommunikationsendgerät, welches die Person bei sich trägt) innerhalb des stationären Verkaufspunkts aufhält und/oder welche Waren sie aus einer Auslage des Verkaufspunkts herausnimmt und/oder welche Waren für sie herausgenommen werden und/oder in der Nähe welcher Waren die Person verweilt,
-- in einem dem zweiten Schritt nachfolgenden dritten Schritt wird eine individuelle Empfehlungsinformation auf einer der Person zumindest temporär zugeordneten Anzeigeeinrichtung angezeigt.

Für den Fall, dass es sich bei dem Telekommunikationsendgerät um ein im oder beim stationären Verkaufspunkt vorrätiges (d.h. im oder beim Verkaufspunkt vorgehaltenes) Telekommunikationsendgerät handelt, ist es beispielsweise erfindungsgemäß vorgesehen, dass beim Betreten oder in der Umgebung des stationären Verkaufspunkts die Person das (durch das Ortungssystem ortbare) Telekommunikationsendgerät erhält und dieses während des Besuchs des stationären Verkaufspunkts mit oder bei sich trägt, etwa in Form einer Uhr o.ä., wobei mittels eines Identifikationsvorgangs der Person oder mittels eines Kopplungsvorgangs (etwa durch Eingabe einer zugeordneten Identifikationsinformation, etwa des Namens der Person, oder durch Interaktion (mit Austausch bzw. Übertragung einer Identifikationsinformation der Person) einer mitgeführten Kundenkarte oder eines persönlichen Geräts der Person mit dem beim stationären Verkaufspunkt vorgehaltenen Telekommunikationsendgerät oder einer anderen Identifikations- oder Kopplungseinrichtung) das vorgehaltene Telekommunikationsendgerät mit der Person (insbesondere temporär, d.h. insbesondere für den Besuch der Person im Bereich des stationären Verkaufspunkts) verbunden wird.

Insbesondere ist es erfindungsgemäß vorgesehen, dass die Freigabe von Einkaufshistorien oder Merk-/Wunschzetteln erlaubt ist, insbesondere aus diversen Onlineshops für die Nutzung im Offline/Einzelhandel Einkauf (d.h. im Bereich des stationären Verkaufspunkts). Der Zugriff erfolgt dabei insbesondere anonym bei Betreten des Shops (d.h. des stationären Verkaufspunkts), insbesondere mit einem Smartphone als mittels des Ortungssystems ortbares Telekommunikationsendgerät. Die Kommunikation erfolgt erfindungsgemäß insbesondere ausschließlich zwischen dem ortbaren Telekommunikationsendgerät (insbesondere das Smartphone des Nutzers (der Person) und dem System vor Ort im Geschäft, insbesondere via Bluetooth und/oder Wifi und/oder 5G, insbesondere unter Nutzung der Gerät-zu-Gerät-Kommunikation, D2D, device-to-device commuinication). Erfindungsgemäß ist es dadurch vorteilhaft möglich, dass die Person bereits beim Betreten des Geschäfts (bzw. des stationären Verkaufspunkts) einen Überblick über die verschiedenen Abteilungen erhält und Produkte schnell und einfach finden kann. Durch die Anzeige der individuellen Empfehlungsinformation auf einer der Person zumindest temporär zugeordneten Anzeigeeinrichtung (beispielsweise die Anzeigeeinrichtung des mitgeführten Telekommunikationsendgeräts, auf welchem insbesondere eine mit dem Verkaufspunkt in Zusammenhang stehende Anwendung, App, ausgeführt wird) ist es erfindungsgemäß vorteilhaft möglich, dass ein Katalog, in oder mit der App, die jeweiligen Produkte im Geschäft mit der jeweiligen Online Darstellung verknüpft und die Bereitstellung von mehr Informationen zum Produkt (etwa den Herstellungsort, die Produktionsbedingungen, Informationen zu Nachhaltigkeit und Material, Garantie und Gewährleistung, etc.) erlaubt. Weiterhin ist es erfindungsgemäß vorteilhaft möglich, dass die Person im Geschäft auf Produkte hingewiesen wird, die sich bereits auf einem Online Merkzettel der Person befinden (insbesondere auch bei einem gänzlich anderen Dienst oder Anbieter, etwa einem ausschließlich als Internetversandhändler oder aber vorwiegend als Internetversandhändler tätigen Anbieter) und es können individuelle, auf die Person zugeschnittene Angebote erstellt werden; bspw. können mehrere Produkte gebündelt angeboten werden, wenn die Person einen entsprechenden Bedarf hat (bzw. dies aus den Wunschlistendaten hervorgeht oder hervorzugehen scheint) und es kann ein entsprechender Rabatt gewährt werden. Insbesondere ist es erfindungsgemäß vorgesehen, dass die Informationen zu den Angeboten bzw. Empfehlungen sowohl auf dem Endgerät der Person angezeigt werden können, aber auch auf dafür vorgesehenen Displays bzw. Anzeigeeinrichtungen im Geschäft, d.h. im Verkaufspunkt. Welche Informationen dort angezeigt werden, wird erfindungsgemäß insbesondere automatisch durch die Näherung der Person (ermittelt durch die Annäherung des Telekommunikationsendgeräts) ermittelt und entsprechend ausgespielt.

Ferner ist es erfindungsgemäß insbesondere vorgesehen, dass im Laden (bzw. im Verkaufspunkt) befindliche und entsprechend geschulte Verkaufspersonen die einkaufende Person beraten und beim Einkauf unterstützen; dies ist aufgrund der vorliegenden, der Person zugeordneten Kaufhistoriedaten und/oder Wunschlistendaten und der Körpergrößedaten in besserer bzw. effizienterer Weise möglich als ohne solche Daten. Insbesondere erfolgt erfindungsgemäß keine Identifikation bzw. es erfolgt keine Verwendung von persönlichen Daten, etwa des Namens oder der Adresse der Person, solange dies nicht erforderlich ist - etwa zur Zahlung oder zur Lieferung. Die Verkaufsperson erhält die Informationen zur jeweiligen Person bei Näherung an diese und kann mittels Augmentation des Kamerabildes auch im Raum scannen, welche einkaufenden Personen gerade da sind, und welche Interessen diese potentiell haben. Die Analyse der Kundeninteressen erfolgt hierbei insbesondere basierend auf den freigegebenen Daten aus Onlineshops sowie dem Verhalten im Geschäft selbst. Dabei werden insbesondere die Verweildauer, der zurückgelegte Pfad durch das Ladengeschäft, etwaige Anproben, etc. einbezogen. So erhält die Verkaufsperson grundlegende Informationen zur Person (etwa hinsichtlich Kleidungsgrößen und/oder Vorlieben). Darauf basierend macht die App aus dem jeweiligen Sortiment des Ladens entsprechend Vorschläge für die Verkaufsperson, die diese wiederum der Person anbieten kann. Dabei werden die Vorlieben, das Profil, die Wunschlisten etc. der Person berücksichtigt. Das Kaufverhalten der Person und das Verhalten der Person im Geschäft fließen wiederum in die Präferenzen der Person mit ein.

Gemäß einer bevorzugten Ausführungsform der vorliegenden Erfindung ist es vorgesehen, dass das Telekommunikationsendgerät ein Telefongerät, insbesondere ein Smartphone, der Person ist und/oder dass das Telekommunikationsendgerät ein am Körper der Person getragenes Telekommunikationsendgerät, insbesondere eine Smartwatch, ist.

Hierdurch ist es vorteilhaft möglich, dass das erfindungsgemäße Verfahren besonders einfach und effizient durchführbar ist.

Gemäß einer weiteren Ausführungsform der vorliegenden Erfindung ist es bevorzugt vorgesehen, dass die Anzeigeeinrichtung eine Anzeigeeinrichtung gemäß wenigstens einer der nachfolgenden Möglichkeiten ist:
-- eine fest im Verkaufspunkt angeordnete Anzeigeeinrichtung, welche temporär ausschließlich der Person zugeordnet ist,
-- eine fest im Verkaufspunkt angeordnete Anzeigeeinrichtung, wobei ein Teilbereich der Anzeigeeinrichtung oder der Anzeigefläche temporär ausschließlich der Person zugeordnet ist,
-- eine Anzeigeeinrichtung des Telekommunikationsendgeräts der Person.

Hierdurch ist es erfindungsgemäß in vorteilhafter Weise möglich, dass in einfacher und flexibler Weise der einkaufenden Person auf den Einkauf bzw. den möglichen Einkauf bzw. auf weitere Produkte oder Einkaufsmöglichkeiten bezogene Informationen zugänglich gemacht werden können.

Gemäß einer weiteren Ausführungsform der vorliegenden Erfindung ist es bevorzugt vorgesehen, dass die Detektion, wo sich die Person innerhalb des stationären Verkaufspunkts aufhält und/oder in der Nähe welcher Waren die Person verweilt, mittels des Ortungssystems in den Räumlichkeiten des Verkaufspunkts unter Nutzung von Bluetoothtechnologie, WLAN/Wifi-Technologie und/oder D2D-Technologie, device-to-device-technology, insbesondere gemäß dem 5G Standard, erfolgt und/oder dass die Detektion, welche Waren die Person aus einer Auslage des Verkaufspunkts herausnimmt und/oder welche Waren für sie herausgenommen werden und/oder in der Nähe welcher Waren die Person verweilt, unter Zuhilfenahme einer Mehrzahl von Detektoren, insbesondere mittels Detektoren-Tags, ermittelt wird, wobei die Detektoren oder Detektoren-Tags insbesondere an den Warengegenständen befestigt oder mit diesen zumindest temporär verbunden sind und/oder an der Auslage befestigt oder mit dieser zumindest temporär verbunden sind.

Hierdurch ist es erfindungsgemäß insbesondere vorteilhaft möglich, dass ein möglichst umfassendes, präzises und detailreiches Bild der Interaktion der Person mit der ausliegenden Ware generierbar ist, so dass die Voraussetzung dafür geschaffen wird, dass auch die unter Rückgriff hierauf generierten Empfehlungen besonders umfassend und präzise sind.

Gemäß einer weiteren Ausführungsform der vorliegenden Erfindung ist es bevorzugt vorgesehen, dass die Person bereits beim Betreten des Verkaufspunkts einen Überblick über die verschiedenen Abteilungen erhält und Produkte - insbesondere Produkte entsprechend der Kaufhistoriedaten und/oder Produkte entsprechend der Wunschlistendaten und/oder Produkte auf einem Online-Merkzettel - schnell und einfach finden kann, insbesondere unter Zurverfügungstellung eines Katalogs, insbesondere innerhalb einer Anwendung des Telekommunikationsendgeräts, innerhalb oder mittels dessen die jeweiligen Produkte im Verkaufspunkt mit der jeweiligen Online-Darstellung verknüpft sind, wobei insbesondere Informationen zum Produkt, insbesondere der Herstellungsort, die Produktionsbedingungen, Informationen zu Nachhaltigkeit, Material, Garantie und/oder Gewährleistung, der Person zur Verfügung gestellt werden.

Hierdurch ist es vorteilhaft möglich, dass das erfindungsgemäße Verfahren besonders einfach und effizient durchführbar ist.

Gemäß einer weiteren Ausführungsform der vorliegenden Erfindung ist es bevorzugt vorgesehen, dass die der Person zugeordneten Kaufhistoriedaten und/oder Wunschlistendaten und Körpergrößedaten für die Verwendung in dem Verkaufspunkt mittels eines Freigabemodus freigegeben sind, welcher eine zum einen feingranulare Freigabe und/oder eine stufenweise Freigabe der der Person zugeordneten Kaufhistoriedaten und/oder Wunschlistendaten und/oder Körpergrößedaten ermöglicht, wobei insbesondere keine Identifikation persönlicher Daten der Person erfolgt, solange dies nicht erforderlich ist, insbesondere zur Zahlung oder Lieferung.

Gemäß einer weiteren Ausführungsform der vorliegenden Erfindung ist es bevorzugt vorgesehen, dass mittels einer AR-Einrichtung, augmented reality-Einrichtung, eine Verkaufsperson Informationen zur jeweiligen Person bei Näherung an das entsprechende Telekommunikationsendgerät erhält,
wobei insbesondere mittels Augmentation eines Kamerabildes verschiedene Personen in einem Raum des Verkaufspunkts detektiert werden, insbesondere welche Personen vor Ort sind und/oder welche Interessen diese haben,
wobei insbesondere die Analyse der Kundeninteressen basierend auf den freigegebenen Daten aus Online-Händlern sowie dem Verhalten im Verkaufspunkt selbst erfolgt, wobei insbesondere die Verweildauer und/oder der Pfad durch den Verkaufspunkt und/oder Anprobenvorgänge einbezogen werden.

Hierdurch ist es vorteilhaft möglich, dass das erfindungsgemäße Verfahren besonders einfach und effizient durchführbar ist.

Gemäß einer weiteren Ausführungsform der vorliegenden Erfindung ist es bevorzugt vorgesehen, dass ein Artikel bei ausreichender Näherung an das Telekommunikationsendgerät der Person auf die Wunschliste gesetzt wird, insbesondere im Zusammenhang mit einem Online-Händler, der mit dem Verkaufspunkt verbunden ist.

Hierdurch ist es erfindungsgemäß insbesondere vorteilhaft möglich, dass ein möglichst umfassendes, präzises und detailreiches Bild der Interaktion der Person mit der ausliegenden Ware generierbar ist.

Des Weiteren wird die Aufgabe gelöst durch ein Ortungssystem zur Unterstützung eines Offline-Einkaufs einer Person in oder bei einem stationären Verkaufspunkt gelöst, wobei die Person ein Telekommunikationsendgerät mit sich führt, wobei das Telekommunikationsendgerät mittels des Ortungssystems in den Räumlichkeiten des Verkaufspunkts ortbar ist, wobei der Person
-- Kaufhistoriedaten und/oder Wunschlistendaten von einem oder mehreren Online-Einkäufen oder Online-Händlern und
-- Körpergrößedaten
   zugeordnet und für die Verwendung in dem Verkaufspunkt freigegeben sind,
   wobei das Ortungssystem derart konfiguriert ist, dass:
      -- das Telekommunikationsendgerät beim Betreten oder in der Umgebung des stationären Verkaufspunkts erkannt wird und die Kaufhistoriedaten und/oder die Wunschlistendaten zur Verfügung stehen,
      -- detektiert wird, wo sich die Person innerhalb des stationären Verkaufspunkts aufhält und/oder welche Waren sie aus einer Auslage des Verkaufspunkts herausnimmt und/oder welche Waren für sie herausgenommen werden und/oder in der Nähe welcher Waren die Person verweilt,
      -- eine individuelle Empfehlungsinformation auf einer der Person zumindest temporär zugeordneten Anzeigeeinrichtung angezeigt wird.

Es ist dadurch gemäß der vorliegenden Erfindung in vorteilhafter Weise möglich, ein zum erfindungsgemäßen Verfahren korrespondierendes erfindungsgemäßes Ortungssystem bereitzustellen.

Die Aufgabe wird ferner gelöst durch ein Telekommunikationsendgerät zur Verwendung in oder mit einem erfindungsgemäßen Ortungsgerät.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf einer Anwendung eines Telekommunikationsendgeräts und/oder auf einem Ortungssystem oder einem Netzknoten oder einer Servereinrichtung eines Ortungssystems, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf einer Anwendung eines Telekommunikationsendgeräts und/oder auf einem Ortungssystem oder einem Netzknoten oder einer Servereinrichtung eines Ortungssystems, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

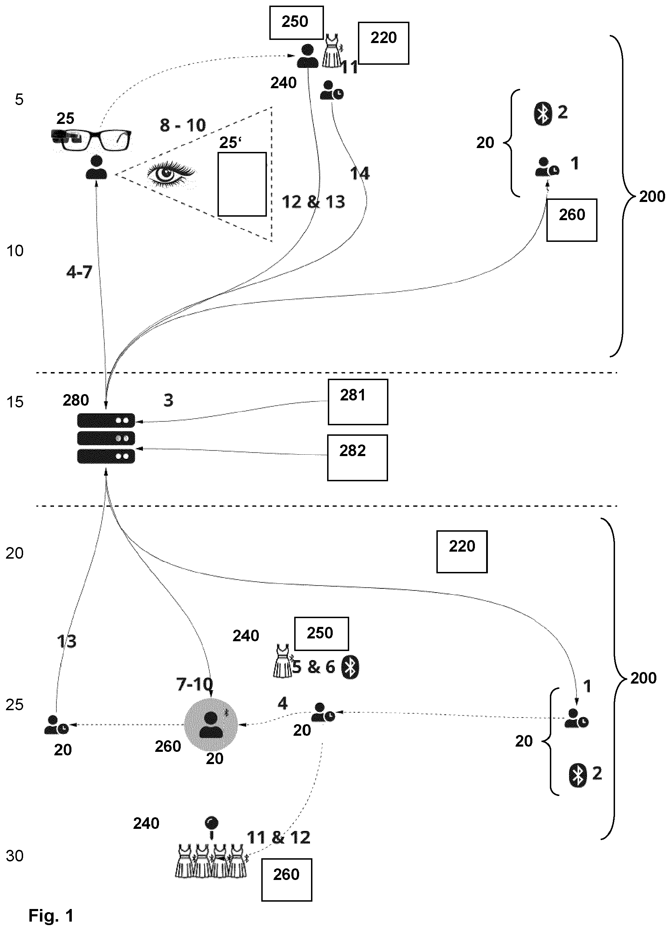

- **Figur 1**: zeigt schematisch und rein beispielhaft zwei exemplarische Situationen einer Einkaufssituation eines Offline-Einkaufs einer Person in oder bei einem stationären Verkaufspunkt, wobei die Person ein Telekommunikationsendgerät mit sich führt und wobei das Telekommunikationsendgerät mittels eines Ortungssystems in den Räumlichkeiten des Verkaufspunkts ortbar ist.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

In Figur 1 ist schematisch und rein beispielhaft die Einkaufssituation eines Offline-Einkaufs einer Person in oder bei einem stationären Verkaufspunkt 200 am Beispiel zweier exemplarischer solcher Einkaufssituationen dargestellt, wobei die Person ein Telekommunikationsendgerät 20 mit sich führt und wobei das Telekommunikationsendgerät 20 mittels eines Ortungssystems 220 in den Räumlichkeiten des Verkaufspunkts 200 ortbar ist. Der stationäre Verkaufspunkt 200 weist erfindungsgemäß wenigstens eine Auslage 240 sowie wenigstens einen, bevorzugt jedoch eine Mehrzahl von Detektoren 250 auf, mittels welchen erkannt werden kann, ob ein Artikel (und, wenn ja, welcher) aus der Auslage 240 genommen wurde. Die Auslage 240 bzw. zumindest ein Teil der Auslagen 240 umfasst einen oder eine Mehrzahl dieser Detektoren 250 (bzw. solche Detektoren 250 sind an der Auslage 240 befestigt oder mit dieser zumindest temporär verbunden), wobei die Mehrzahl von Detektoren 250, zumindest zum Teil, auch an den Warengegenständen befestigt oder mit diesen zumindest temporär verbunden sein können.

Darüber hinaus weist der stationäre Verkaufspunkt 200 erfindungsgemäß wenigstens eine Anzeigeeinrichtung 260 auf bzw. es ist ein solche Anzeigeeinrichtung 260 zumindest temporär im Verkaufspunkt 200 vorhanden.

Erfindungsgemäß umfasst das Verfahren zur Unterstützung des Offline-Einkaufs der Person in oder bei dem stationären Verkaufspunkt 200, dass der Person
-- Kaufhistoriedaten und/oder Wunschlistendaten von einem oder mehreren Online-Einkäufen oder Online-Händlern und
-- Körpergrößedaten
   zugeordnet sind und diese Daten für die Verwendung in dem Verkaufspunkt 200 freigegeben sind. Gemäß dem erfindungsgemäßen Verfahren werden insbesondere die folgenden Schritte durchgeführt:
-- in einem ersten Schritt wird das Telekommunikationsendgerät 20 beim Betreten oder in der Umgebung des stationären Verkaufspunkts erkannt und es stehen die Kaufhistoriedaten und/oder die Wunschlistendaten zur Verfügung,
-- in einem dem ersten Schritt nachfolgenden zweiten Schritt, wird detektiert (insbesondere kontinuierlich bzw. quasikontinuierlich, d.h. mit einer vergleichsweise hohen Wiederholrate bzw. Frequenz von, beispielsweise, mindestens 0,5 Hz bis 1 Hz, detektiert), wo sich die Person innerhalb des stationären Verkaufspunkts 200 aufhält und/oder welche Waren sie aus der Auslage 240 des Verkaufspunkts 200 herausnimmt und/oder welche Waren für sie herausgenommen werden und/oder in der Nähe welcher Waren die Person verweilt,
-- in einem dem zweiten Schritt nachfolgenden dritten Schritt wird eine individuelle Empfehlungsinformation auf einer der Person zumindest temporär zugeordneten Anzeigeeinrichtung 260 angezeigt.

Die Anzeigeeinrichtung 260 ist erfindungsgemäß insbesondere als eine Anzeigeeinrichtung gemäß wenigstens einer der nachfolgenden Möglichkeiten vorgesehen:
-- eine fest im Verkaufspunkt 200 angeordnete Anzeigeeinrichtung, welche temporär ausschließlich der Person zugeordnet ist,
-- eine fest im Verkaufspunkt 200 angeordnete Anzeigeeinrichtung, wobei ein Teilbereich der Anzeigeeinrichtung oder der Anzeigefläche temporär ausschließlich der Person zugeordnet ist,
-- eine Anzeigeeinrichtung des Telekommunikationsendgeräts 20 der Person ist.

Der stationäre Verkaufspunkt 200 weist erfindungsgemäß insbesondere auch eine Servereinrichtung 280 auf bzw. eine solche Servereinrichtung 280 (insbesondere des Ortungssystems 220) ist dem stationären Verkaufspunkt 200 zugeordnet bzw. der stationäre Verkaufspunkt 200 hat Zugriff darauf. Die Servereinrichtung 280 ist erfindungsgemäß bevorzugt mit einem Onlinehändler 281 oder einer Mehrzahl solcher Onlinehändler und/oder mit einem Zahlungsabwickler 282 oder Zahlungsdienstleister 282 verbunden.

Figur 1 stellt hierbei in einem Bereich, welcher oberhalb der schematisch dargestellten Servereinrichtung 280, des Onlinehändler 281 und des Zahlungsabwicklers 282 dargestellt ist, beispielhaft eine exemplarische Situation einer Einkaufssituation eines Offline-Einkaufs einer Person in oder bei dem stationären Verkaufspunkt 200 dar, wobei neben der Person auch eine Verkaufsperson mit einer AR-Einrichtung 25 anwesend ist.

Diese exemplarische Einkaufssituation eines Offline-Einkaufs einer Person in oder bei dem stationären Verkaufspunkt 200 ist anhand mehrerer Prozessschritte nachfolgend erläutert, wobei sich die Prozessschritte auf die Darstellung im Bereich oberhalb der schematisch dargestellten Servereinrichtung 280, des Onlinehändler 281 und des Zahlungsabwicklers 282 bezieht, d.h. wobei neben der Person auch eine Verkaufsperson (insbesondere zur Beratung) mit einer AR-Einrichtung 25 anwesend ist: In einem ersten Prozessschritt 1 betritt die Person den Laden (stationären Verkaufspunkt 200), insbesondere mit einer Smartwatch als Telekommunikationsendgerät 20, welche als Signalgeber für den Service konfiguriert ist, insbesondere via Bluetooth Beacon. In einem zweiten Prozessschritt 2 beginnt das System die Person sofort nach Betreten des Ladens zu tracken (d.h. mittels der Position des Beacons, d.h. des Telekommunikationsendgeräts 20) und ruft die erforderlichen Informationen aus dem Datenbestand ab.

In einem dritten Prozessschritt 3 hat die Person beispielhaft die Freigabe für folgende Daten erteilt:
-- a. Kaufhistorie und Wunschlisten diverser Online Händler, mit denen sie in Beziehung steht,
-- b. Kaufhistorie eines Zahlungsdienstleisters (beispielsweise Paypal, Payback etc.),
-- c. Größenangaben zu Ihren Kleidungsgrößen,
-- d. Maßangaben zur Ermittlung von Kleidungsgrößen (Körpermaße).

In einem vierten Prozessschritt 4 ermittelt das System anhand der Kaufhistorie, dass die Person zu den bevorzugt zu bedienenden Personen gehört (bspw. hoher Umsatz, Stammkunde/Stammkundin, wenige Retouren, etc.).

In einem fünften Prozessschritt 5 ermittelt das System anhand der Wunschliste und vergangener Interaktionen, dass der Umsatz der Person voraussichtlich einen bestimmten Wert überschreiten wird (vergangene Einkäufe, Marken und Preispräferenz der Person); enthalten ist auch die Detektion der Merkmale der Waren-Tags und deren Herausnahme (aus der Auslage 240).

In einem sechsten Prozessschritt ermittelt das System eine verfügbare Verkaufsperson und beauftragt diese die Person zu beraten.

In einem siebten Prozessschritt 7 ist die Verkaufsperson mit einer Smarten Brille (bzw. AR-Einrichtung 25) und einem Audioausgabegerät im Ohr versehen, über die sie die entsprechenden Kundenaufträge und Informationen erhält (auf dem Minidisplay und per Audioausgabe im Ohr).

In einem achten Prozessschritt 8 kann sich die Verkaufsperson im Laden umschauen und erhält über Augmented Reality Überlagerung einen Indikator (beispielsweise durch Pfeile nach links/rechts), wo sich die Person befindet und um welche Person es sich handelt, wenn sie ins Blickfeld rückt; die Person wird entsprechend auf dem Display (der AR-Einrichtung 25) markiert.

In einem neunten Prozessschritt 9 erhält die Mitarbeiterin Tipps zur Vorgehensweise und zu den voraussichtlichen Bedürfnissen der Person (als Textausgabe auf dem Display und/oder als Audio im Ohr).

In einem zehnten Prozessschritt 10 erhält die Verkaufsperson alle Größeninformationen, die sie für die Person benötigt.

In einem elften Prozessschritt 11 kann die Verkaufsperson die Person nun entsprechend der zur Verfügung gestellten Informationen optimal beraten.

In einem zwölften Prozessschritt 12 kann die Verkaufsperson nach der Beratung zusätzliche Informationen über die Person im System hinterlegen, um die zukünftige Beratung zu optimieren (etwa: Abneigung bezüglich bestimmter Farben, Präferenz bezüglich bestimmter Schnitte, etc.)

In einem dreizehnten Prozessschritt 13 kann die Verkaufsperson nach der Beratung dem System Feedback über die Qualität der Informationen und Hinweise geben, um den Beratungsprozess weiter zu verbessern bzw. zu verfeinern.

In einem vierzehnten Prozessschritt 14 kann die Person nach der Beratung dem System Feedback über die Qualität der Beratung und das Produkt geben, um den Beratungsprozess weiter zu verbessern bzw. zu verfeinern.

Darüber hinaus stellt Figur 1 in einem Bereich, welcher unterhalb der schematisch dargestellten Servereinrichtung 280, des Onlinehändler 281 und des Zahlungsabwicklers 282 dargestellt ist, beispielhaft eine andere exemplarische Situation einer Einkaufssituation eines Offline-Einkaufs einer Person in oder bei dem stationären Verkaufspunkt 200 dar, wobei neben der Person auch eine Verkaufsperson mit einer AR-Einrichtung 25 anwesend ist.

Diese exemplarische Einkaufssituation eines Offline-Einkaufs der Person in oder bei dem stationären Verkaufspunkt 200 ist anhand mehrerer Prozessschritte nachfolgend erläutert, wobei sich die Prozessschritte auf die Darstellung im Bereich unterhalb der schematisch dargestellten Servereinrichtung 280, des Onlinehändler 281 und des Zahlungsabwicklers 282 bezieht, d.h. wobei eine volldigitale Beratung dargestellt ist.
In einem ersten Prozessschritt 1 betritt die Person den Laden (stationären Verkaufspunkt 200), insbesondere mit einer Smartwatch als Telekommunikationsendgerät 20, welche als Signalgeber für den Service konfiguriert ist, insbesondere via Bluetooth Beacon.
In einem zweiten Prozessschritt 2 beginnt das System die Person sofort nach Betreten des Ladens zu tracken (d.h. mittels der Position des Beacons, d.h. des Telekommunikationsendgeräts 20) und ruft in einem dritte Prozessschritt 3 die erforderlichen Informationen aus dem Datenbestand ab.

In einem vierten Prozessschritt 4 hat die Person die Freigabe für folgende Daten erteilt:
-- a. Kaufhistorie & Wunschlisten diverser Online Händler, mit denen sie in Beziehung steht.
-- b. Kaufhistorie eines Zahlungsdienstleisters (eg. Paypal, Payback etc.)
-- c. Größenangaben zu Ihren Kleidungsgrößen
-- d. Maßangaben zur Ermittlung von Kleidungsgrößen (Körpermaße) In einem fünften Prozessschritt 5 verweilt die Person (detektiert durch die Nähe des Smartwatch Bluetooth Beacons für eine Zeitdauer, die eine bestimmte Dauer überschreitet) einen Moment bei einer bestimmten Produktkategorie - etwa Strickwaren
- und nimmt das ein oder andere Produkt aus dem Sortiment in die Hand.

In einem sechsten Prozessschritt 6 werden die Produkte über entsprechende Tags (d.h. Detektoren) markiert und die Herausnahme durch die Person entsprechend registriert.

In einem siebten Prozessschritt 7 erkennt das System die Verweildauer der Kundin und gleicht den aktuellen Bereich (Strickwaren - ermittelt anhand der Position im Laden und der Produkte) mit der Wunschliste und Historie der Person ab.

In einem achten Prozessschritt 8 findet das System findet einige Artikel aus der Wunschliste der Person, die in diesen Bereich fallen (Strickwaren)

In einem neunten Prozessschritt 9 ermittelt das System passende Empfehlungen aus dem eigenen Sortiment des Ladens (gleiche Marke, gleicher Schnitt, gleiche Farben etc., Vorlieben der Kundin anhand Historie und Wunschliste, Preisbereich).

In einem zehnten Prozessschritt 10 blendet das System im Spiegel (als Anzeigeeinrichtung 260), bei dem die Person gerade steht (Näherungsdetektion wird beispielsweise über Bluetooth Beacon ermittelt) entsprechende Vorschläge ein und macht die Person zusätzlich über eine Notification bzw. Nachricht (etwa auf dem Telekommunikationsendgerät, z.B. Smartphone bzw. der Smartwatch) auf das Angebot aufmerksam.

In einem elften Prozessschritt 11 interagiert die Kundin mit dem Spiegel (d.h. mit der Anzeigeeinrichtung 260) durch Auswahl eines Produktes (etwa per Touchscreen) und signalisiert so den Wunsch es in Augenschein zu nehmen.

In einem zwölften Prozessschritt 12 ermittelt das System den aktuellen Standort des Produktes im Regal und weist der Kundin mit visuellen Signalen den Weg dorthin. (etwa: Aufleuchten des Regals bzw. Kleiderständers vermittels eines entsprechenden Leuchtmittels).

In einem dreizehnten Prozessschritt 13 kann die Person nun dorthin laufen und das Produkt herausnehmen bzw. nach erfolgtem Einkauf das System bewerten und Feedback über die Beratung und Produkte geben, um den Beratungsprozess weiter zu verbessern bzw. zu verfeinern.

Beide exemplarische Situationen können erfindungsgemäß auch parallel bzw. zeitgleich in ein und demselben stationären Verkaufspunkt realisiert sein bzw. für die einkaufende Person (welche das Telekommunikationsendgerät 20 trägt) gemäß der im oberen Teil der Figur 1 dargestellten Situation und für eine weitere einkaufende Person (welche ein weiteres Telekommunikationsendgerät tragen würde, welche jedoch nicht dargestellt ist) gemäß der im unteren Teil der Figur 1 dargestellten Situation.

Erfindungsgemäß werden insbesondere die weiteren Indikatoren oder Informationen bzw. Kriterien, insbesondere zur Erstellung der individuellen Empfehlungsinformation berücksichtigt:
-- Verweildauer (der Person bzw. des Telekommunikationsendgeräts 20) am jeweiligen Produkt;
-- Verweildauer in der jeweiligen Abteilung des stationären Verkaufspunkts 200 (etwa Abteilungen Oberbekleidung, Strickwaren, Jacken etc.);
-- Anproben von Artikeln - hierzu wird erfindungsgemäß insbesondere sowohl das (zur Anprobe mitgenommene) Produkt als auch die Person (bzw. das Telekommunikationsendgerät 20, beispielsweise beim Betreten der Kabine) getrackt d.h. geortet;
-- vergangene bzw. zurückliegende Einkäufe, insbesondere geschäftsübergreifend (d.h. nicht lediglich solche Produkte, die beim Unternehmen des stationären Verkaufspunkts 200 gekauft wurden, sondern auch solche Produkte, die von anderen Unternehmen gekauft wurden), d.h. falls ein ähnliches Produkt vor einem Monat bereits gekauft wurde, wird insbesondere keine erneute Empfehlung mehr ausgesprochen;
-- Informationen zu der familiären Situation (etwa zum Vorhandensein eines Kindes oder von Kindern, eines Lebenspartners oder einer Lebenspartnerin der Person, etc.);
-- Preiskategorien vergangener bzw. zurückliegender Einkäufe (ebenfalls insbesondere geschäftsübergreifend) ;
-- Produkte in den Online Wunschzetteln/Merkzetteln der Person und seit wann diese dort bereits hinterlegt sind.

Ferner ist es erfindungsgemäß möglich Beurteilungen bzw. Reviews für die Produkte im Laden (ähnliche Online Reviews) zu geben und/oder zu erhalten.

Erfindungsgemäß ist es insbesondere möglich, dass keine "echten" Verkaufspersonen mehr im stationären Verkaufspunkt 200 vorhanden sind, sondern nur noch eine virtuelle Verkaufsperson, die beratend zur Seite steht (mit Sprachausgabe etc.).

Bei Geschäften bzw. Unternehmen, die online wie offline präsent sind, wird die Einkaufshistorie im Onlineshop auch mit Einkaufen aus dem Geschäft gepflegt und entsprechend berücksichtigt.

Einen Artikel auf die Wunschliste setzen erfolgt per Proximity-Sensorik (d.h. Annäherungs-Sensorik) beispielsweise mit dem Smartphone bzw. Telekommunikationsendgerät 20. Die Ergänzung des Wunschzettels erfolgt dabei in dem jeweiligen Onlineshop sowie einer übergreifenden Liste, die insbesondere automatisch abgeglichen wird.

Insbesondere ist es erfindungsgemäß möglich, dass die App zur Navigation durch den Laden genutzt wird, aber auch um den Einkauf abzuwickeln: Mithin ist es möglich, ein Produkt aus dem Laden in einen Warenkorb aufzunehmen, digital zu zahlen und liefern zu lassen; alternativ ist es auch möglich das Produkt durch Angestellte des Geschäfts hinterlegen zu lassen, etwa zur Abholung zu einem späteren Zeitpunkt (also beispielsweise wenn der Einkaufsbummel abgeschlossen ist und die einkaufende Person wieder in Richtung Auto geht). Weiterhin sind weitere Dienste denkbar, etwa ein Transport zum Fahrzeug, die Hinterlegung in einer "Packstation" bzw. einen Einkaufs-Bus oder ähnliches. Je nach Produktgattung ist es ggf. möglich, dass sich das Produkt nicht selbst transportieren lässt, bspw. bei Möbeln.

## Patentansprüche

1. Verfahren zur Unterstützung eines Offline-Einkaufs einer Person in oder bei einem stationären Verkaufspunkt (200), wobei die Person ein Telekommunikationsendgerät (20) mit sich führt, wobei das Telekommunikationsendgerät (20) mittels eines Ortungssystems (220) in den Räumlichkeiten des Verkaufspunkts (20) ortbar ist, wobei der Person
-- Kaufhistoriedaten und/oder Wunschlistendaten von einem oder mehreren Online-Einkäufen oder Online-Händlern und
-- Körpergrößedaten
zugeordnet und für die Verwendung in dem Verkaufspunkt (200) freigegeben sind,
wobei das Verfahren die folgenden Schritte umfasst,
-- in einem ersten Schritt wird das Telekommunikationsendgerät (20) beim Betreten oder in der Umgebung des stationären Verkaufspunkts erkannt und es stehen die Kaufhistoriedaten und/oder die Wunschlistendaten zur Verfügung,
-- in einem dem ersten Schritt nachfolgenden zweiten Schritt, wird detektiert, wo sich die Person innerhalb des stationären Verkaufspunkts (200) aufhält und/oder welche Waren sie aus einer Auslage (240) des Verkaufspunkts (200) herausnimmt und/oder welche Waren für sie herausgenommen werden und/oder in der Nähe welcher Waren die Person verweilt,
-- in einem dem zweiten Schritt nachfolgenden dritten Schritt wird eine individuelle Empfehlungsinformation auf einer der Person zumindest temporär zugeordneten Anzeigeeinrichtung (260) angezeigt.

2. Verfahren nach Anspruch 1, **dadurch gekennzeichnet, dass** das Telekommunikationsendgerät (20) ein Telefongerät, insbesondere ein Smartphone, der Person ist und/oder dass das Telekommunikationsendgerät (20) ein am Körper der Person getragenes Telekommunikationsendgerät (20), insbesondere eine Smartwatch, ist.

3. Verfahren nach einem der vorhergehenden Ansprüche, **dadurch gekennzeichnet, dass** die Anzeigeeinrichtung (260) eine Anzeigeeinrichtung gemäß wenigstens einer der nachfolgenden Möglichkeiten ist:
-- eine fest im Verkaufspunkt (200) angeordnete Anzeigeeinrichtung, welche temporär ausschließlich der Person zugeordnet ist,
-- eine fest im Verkaufspunkt (200) angeordnete Anzeigeeinrichtung, wobei ein Teilbereich der Anzeigeeinrichtung oder der Anzeigefläche temporär ausschließlich der Person zugeordnet ist,
-- eine Anzeigeeinrichtung des Telekommunikationsendgeräts (20) der Person ist.

4. Verfahren nach einem der vorhergehenden Ansprüche, **dadurch gekennzeichnet, dass** die Detektion, wo sich die Person innerhalb des stationären Verkaufspunkts (200) aufhält und/oder in der Nähe welcher Waren die Person verweilt, mittels des Ortungssystems (220) in den Räumlichkeiten des Verkaufspunkts (20) unter Nutzung von Bluetoothtechnologie, WLAN/Wifi-Technologie und/oder D2D-Technologie, device-to-device-technology, insbesondere gemäß dem 5G Standard, erfolgt und/oder
dass die Detektion, welche Waren die Person aus einer Auslage (240) des Verkaufspunkts (200) herausnimmt und/oder welche Waren für sie herausgenommen werden und/oder in der Nähe welcher Waren die Person verweilt, unter Zuhilfenahme einer Mehrzahl von Detektoren (250), insbesondere mittels Detektoren-Tags, ermittelt wird, wobei die Detektoren (250) oder Detektoren-Tags insbesondere an den Warengegenständen befestigt oder mit diesen zumindest temporär verbunden sind und/oder an der Auslage (240) befestigt oder mit dieser zumindest temporär verbunden sind.

5. Verfahren nach einem der vorhergehenden Ansprüche, **dadurch gekennzeichnet, dass** die Person bereits beim Betreten des Verkaufspunkts (200) einen Überblick über die verschiedenen Abteilungen erhält und Produkte - insbesondere Produkte entsprechend der Kaufhistoriedaten und/oder Produkte entsprechend der Wunschlistendaten und/oder Produkte auf einem Online-Merkzettel - schnell und einfach finden kann, insbesondere unter Zurverfügungstellung eines Katalogs, insbesondere innerhalb einer Anwendung des Telekommunikationsendgeräts, innerhalb oder mittels dessen die jeweiligen Produkte im Verkaufspunkt (200) mit der jeweiligen Online-Darstellung verknüpft sind, wobei insbesondere Informationen zum Produkt, insbesondere der Herstellungsort, die Produktionsbedingungen, Informationen zu Nachhaltigkeit, Material, Garantie und/oder Gewährleistung, der Person zur Verfügung gestellt werden.

6. Verfahren nach einem der vorhergehenden Ansprüche, **dadurch gekennzeichnet, dass** die der Person zugeordneten Kaufhistoriedaten und/oder Wunschlistendaten und Körpergrößedaten für die Verwendung in dem Verkaufspunkt (200) mittels eines Freigabemodus freigegeben sind, welcher eine zum einen feingranulare Freigabe und/oder eine stufenweise Freigabe der der Person zugeordneten Kaufhistoriedaten und/oder Wunschlistendaten und/oder Körpergrößedaten ermöglicht,
wobei insbesondere keine Identifikation persönlicher Daten der Person erfolgt, solange dies nicht erforderlich ist, insbesondere zur Zahlung oder Lieferung.

7. Verfahren nach einem der vorhergehenden Ansprüche, **dadurch gekennzeichnet, dass** mittels einer AR-Einrichtung, augmented reality-Einrichtung, eine Verkaufsperson Informationen zur jeweiligen Person bei Näherung an das entsprechende Telekommunikationsendgerät (20) erhält,
wobei insbesondere mittels Augmentation eines Kamerabildes verschiedene Personen in einem Raum des Verkaufspunkts (200) detektiert werden, insbesondere welche Personen (20) vor Ort sind und/oder welche Interessen diese haben,
wobei insbesondere die Analyse der Kundeninteressen basierend auf den freigegebenen Daten aus Online-Händlern sowie dem Verhalten im Verkaufspunkt (200) selbst erfolgt, wobei insbesondere die Verweildauer und/oder der Pfad durch den Verkaufspunkt (200) und/oder Anprobenvorgänge einbezogen werden.

8. Verfahren nach einem der vorhergehenden Ansprüche, **dadurch gekennzeichnet, dass** ein Artikel bei ausreichender Näherung an das Telekommunikationsendgerät (20) der Person auf die Wunschliste gesetzt wird, insbesondere im Zusammenhang mit einem Online-Händler, der mit dem Verkaufspunkt (200) verbunden ist.

9. Ortungssystem (220) zur Unterstützung eines Offline-Einkaufs einer Person in oder bei einem stationären Verkaufspunkt (200), wobei die Person ein Telekommunikationsendgerät (20) mit sich führt, wobei das Telekommunikationsendgerät (20) mittels des Ortungssystems (220) in den Räumlichkeiten des Verkaufspunkts (20) ortbar ist, wobei der Person
-- Kaufhistoriedaten und/oder Wunschlistendaten von einem oder mehreren Online-Einkäufen oder Online-Händlern und
-- Körpergrößedaten
zugeordnet und für die Verwendung in dem Verkaufspunkt (200) freigegeben sind,
wobei das Ortungssystem (220) derart konfiguriert ist, dass:
-- das Telekommunikationsendgerät (20) beim Betreten oder in der Umgebung des stationären Verkaufspunkts erkannt wird und die Kaufhistoriedaten und/oder die Wunschlistendaten zur Verfügung stehen,
-- detektiert wird, wo sich die Person innerhalb des stationären Verkaufspunkts (200) aufhält und/oder welche Waren sie aus einer Auslage (240) des Verkaufspunkts (200) herausnimmt und/oder welche Waren für sie herausgenommen werden und/oder in der Nähe welcher Waren die Person verweilt,
-- eine individuelle Empfehlungsinformation auf einer der Person zumindest temporär zugeordneten Anzeigeeinrichtung (260) angezeigt wird.

10. Telekommunikationsendgerät (20) zur Verwendung mit einem Ortungssystem (220) gemäß Anspruch 9 in oder bei einem stationären Verkaufspunkt (200).

11. Computerprogramm umfassend Befehle, mit deren Hilfe die Schritte eines Verfahrens nach einem der Ansprüche 1 bis 8 durchführbar sind, wenn das Computerprogramm auf einer programmierbaren Einrichtung, insbesondere auf einer Anwendung eines Telekommunikationsendgeräts (20) und/oder auf einem Ortungssystem (220) oder einem Netzknoten oder einer Servereinrichtung eines Ortungssystems (220), ausgeführt wird.

12. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf einer programmierbaren Einrichtung, insbesondere auf einer Anwendung eines Telekommunikationsendgeräts (20) und/oder auf einem Ortungssystem (220) oder einem Netzknoten oder einer Servereinrichtung eines Ortungssystems (220), auszuführenden Teil des Computerprogramms nach Anspruch 11 speichert oder überträgt.

## Geänderte Patentansprüche

### Geänderte Patentansprüche gemäss Regel 137(2) EPÜ.

1. Verfahren zur Unterstützung eines Offline-Einkaufs einer Person in oder bei einem stationären Verkaufspunkt (200), wobei die Person ein Telekommunikationsendgerät (20) mit sich führt, wobei das Telekommunikationsendgerät (20) mittels eines Ortungssystems (220) in den Räumlichkeiten des Verkaufspunkts (20) ortbar ist, wobei der Person
- - Kaufhistoriedaten und/oder Wunschlistendaten von einem oder mehreren Online-Einkäufen oder Online-Händlern und
- - Körpergrößedaten zugeordnet und für die Verwendung in dem Verkaufspunkt (200) freigegeben sind, wobei das Verfahren die folgenden Schritte umfasst,
- - in einem ersten Schritt wird das Telekommunikationsendgerät (20) beim Betreten oder in der Umgebung des stationären Verkaufspunkts erkannt und es stehen die Kaufhistoriedaten und/oder die Wunschlistendaten zur Verfügung,
- - in einem dem ersten Schritt nachfolgenden zweiten Schritt, wird mittels einer Proximity-Sensorik detektiert, wo sich die Person innerhalb des stationären Verkaufspunkts (200) aufhält und/oder welche Waren sie aus einer Auslage (240) des Verkaufspunkts (200) herausnimmt und/oder in der Nähe welcher Waren die Person verweilt,
- - in einem dem zweiten Schritt nachfolgenden dritten Schritt wird eine individuelle Empfehlungsinformation, auf Basis der mittels der Proximity-Sensorik erfassten Nähe von Waren zur Person, auf einer der Person zugeordneten Anzeigeeinrichtung (260) angezeigt.

2. Verfahren nach Anspruch 1, **dadurch gekennzeichnet, dass** das Telekommunikationsendgerät (20) ein Telefongerät, insbesondere ein Smartphone, der Person ist und/oder dass das Telekommunikationsendgerät (20) ein am Körper der Person getragenes Telekommunikationsendgerät (20), insbesondere eine Smartwatch, ist.

3. Verfahren nach einem der vorhergehenden Ansprüche, **dadurch gekennzeichnet, dass** die Anzeigeeinrichtung (260) eine Anzeigeeinrichtung gemäß wenigstens einer der nachfolgenden Möglichkeiten ist:
- - eine fest im Verkaufspunkt (200) angeordnete Anzeigeeinrichtung, welche temporär ausschließlich der Person zugeordnet ist,
- - eine fest im Verkaufspunkt (200) angeordnete Anzeigeeinrichtung, wobei ein Teilbereich der Anzeigeeinrichtung oder der Anzeigefläche temporär ausschließlich der Person zugeordnet ist,
- - eine Anzeigeeinrichtung des Telekommunikationsendgeräts (20) der Person ist.

4. Verfahren nach einem der vorhergehenden Ansprüche, **dadurch gekennzeichnet, dass** die Detektion, wo sich die Person innerhalb des stationären Verkaufspunkts (200) aufhält und/oder in der Nähe welcher Waren die Person verweilt, mittels des Ortungssystems (220) in den Räumlichkeiten des Verkaufspunkts (20) unter Nutzung von Bluetoothtechnologie, WLAN/Wifi-Technologie und/oder D2D-Technologie, device-to-device-technology, insbesondere gemäß dem 5G Standard, erfolgt und/oder
dass die Detektion, welche Waren die Person aus einer Auslage (240) des Verkaufspunkts (200) herausnimmt und/oder welche Waren für sie herausgenommen werden und/oder in der Nähe welcher Waren die Person verweilt, unter Zuhilfenahme einer Mehrzahl von Detektoren (250), insbesondere mittels Detektoren-Tags, ermittelt wird, wobei die Detektoren (250) oder Detektoren-Tags insbesondere an den Warengegenständen befestigt oder mit diesen zumindest temporär verbunden sind und/oder an der Auslage (240) befestigt oder mit dieser zumindest temporär verbunden sind.

5. Verfahren nach einem der vorhergehenden Ansprüche, **dadurch gekennzeichnet, dass** die Person bereits beim Betreten des Verkaufspunkts (200) einen Überblick über die verschiedenen Abteilungen erhält und Produkte - insbesondere Produkte entsprechend der Kaufhistoriedaten und/oder Produkte entsprechend der Wunschlistendaten und/oder Produkte auf einem Online-Merkzettel - schnell und einfach finden kann, insbesondere unter Zurverfügungstellung eines Katalogs, insbesondere innerhalb einer Anwendung des Telekommunikationsendgeräts, innerhalb oder mittels dessen die jeweiligen Produkte im Verkaufspunkt (200) mit der jeweiligen Online-Darstellung verknüpft sind, wobei insbesondere Informationen zum Produkt, insbesondere der Herstellungsort, die Produktionsbedingungen, Informationen zu Nachhaltigkeit, Material, Garantie und/oder Gewährleistung, der Person zur Verfügung gestellt werden.

6. Verfahren nach einem der vorhergehenden Ansprüche, **dadurch gekennzeichnet, dass** ein Artikel bei ausreichender Näherung an das Telekommunikationsendgerät (20) der Person, auf Basis der, mittels der Proximity-Sensorik erfassten Nähe von Waren zur Person, auf die Wunschliste gesetzt wird, insbesondere im Zusammenhang mit einem Online-Händler, der mit dem Verkaufspunkt (200) verbunden ist.

7. Ortungssystem (220) zur Unterstützung eines Offline-Einkaufs einer Person in oder bei einem stationären Verkaufspunkt (200), wobei die Person ein Telekommunikationsendgerät (20) mit sich führt, wobei das Telekommunikationsendgerät (20) mittels des Ortungssystems (220) in den Räumlichkeiten des Verkaufspunkts (20) ortbar ist, wobei der Person
- - Kaufhistoriedaten und/oder Wunschlistendaten von einem oder mehreren Online-Einkäufen oder Online-Händlern und
- - Körpergrößedaten
zugeordnet und für die Verwendung in dem Verkaufspunkt (200) freigegeben sind, wobei das Ortungssystem (220) derart konfiguriert ist, dass:
- - das Telekommunikationsendgerät (20) beim Betreten oder in der Umgebung des stationären Verkaufspunkts erkannt wird und die Kaufhistoriedaten und/oder die Wunschlistendaten zur Verfügung stehen,
- - detektiert wird, mittels einer Proximity-Sensorik, wo sich die Person innerhalb des stationären Verkaufspunkts (200) aufhält und/oder welche Waren sie aus einer Auslage (240) des Verkaufspunkts (200) herausnimmt und/oder in der Nähe welcher Waren die Person verweilt,
- - eine individuelle Empfehlungsinformation, auf Basis der, mittels der Proximity-Sensorik erfassten Nähe von Waren zur Person, auf einer der Person zugeordneten Anzeigeeinrichtung (260) angezeigt wird.

8. Telekommunikationsendgerät (20) zur Verwendung mit einem Ortungssystem (220) gemäß Anspruch 7 in oder bei einem stationären Verkaufspunkt (200).

9. Computerprogramm umfassend Befehle, mit deren Hilfe die Schritte eines Verfahrens nach einem der Ansprüche 1 bis 6 durchführbar sind, wenn das Computerprogramm auf einer programmierbaren Einrichtung, insbesondere auf einer Anwendung eines Telekommunikationsendgeräts (20) und/oder auf einem Ortungssystem (220) oder einem Netzknoten oder einer Servereinrichtung eines Ortungssystems (220), ausgeführt wird.

10. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 9 speichert oder überträgt oder wobei das computerlesbare Medium oder das Datenträgersignal den auf einer programmierbaren Einrichtung, insbesondere auf einer Anwendung eines Telekommunikationsendgeräts (20) und/oder auf einem Ortungssystem (220) oder einem Netzknoten oder einer Servereinrichtung eines Ortungssystems (220), auszuführenden Teil des Computerprogramms nach Anspruch 9 speichert oder überträgt.
